# EUROPÄISCHE PATENTSCHRIFT

(11) **EP 0 839 701 B1**
(45) Veröffentlichungstag und Bekanntmachung des Hinweises auf die Patenterteilung: **17.03.2004**
(21) Anmeldenummer: 97117855.3
(22) Anmeldetag: 15.10.1997
(51) Int. Cl.: B60T 13/74, B60T 7/02

(54) **Feststellbremseinrichtung für Kraftfahrzeuge**
Parking brake for motor vehicles
Frein de stationnement pour véhicules automobiles

(30) Priorität: 31.10.1996 DE 19643949
(43) Veröffentlichungstag der Anmeldung: 06.05.1998
(73) Patentinhaber: Continental Teves AG & Co. oHG, 60488 Frankfurt (DE)
(72) Erfinder: Balz, Jürgen, 65510 Hünstetten-Oberlibbach (DE); Rieth, Peter, 65343 Eltville (DE); Döll, Andreas, 60439 Frankfurt/Main (DE)
(74) Vertreter: Dusil, Vladimir, Dipl.-Ing.

(56) Entgegenhaltungen:
- DE-A- 3 502 100
- DE-A- 4 129 934
- FR-A- 2 691 934

## Beschreibung

Die Erfindung betrifft eine Feststellbremseinrichtung für Kraftfahrzeuge mit einem von einer primären elektrischen Energieversorgung, bspw. der Fahrzeugbatterie, gespeisten Elektromotor zur Betätigung der Feststellbremse und mit einer mechanisch stromlosen Verriegelungseinrichtung zum Verhindern eines ungewollten Lösens der Feststellbremse.

Die Feststellbremsanlagen heutiger Kraftfahrzeuge werden fast ausnahmslos rein mechanisch betätigt und verriegelt. Die Betätigung erfolgt dabei über einen von der Betriebsbremsanlage unabhängigen Handhebel oder ein Fußpedal. Neben der zur Erzielung einer ausreichenden Bremskraft notwendigen hohen Betätigungskraft verursachen rein mechanisch betätigte Feststellbremsen erhöhte Kosten aufgrund der Verlegung und Justage zusätzlicher Seilzüge. Auch bieten derart rein mechanische Komponenten keine Möglichkeit, eine elektronische Schnittstelle zu übergeordneten Systemen, wie einer Wegfahrsperre oder einer Anfahrhilfe, vorzusehen.

Es wurde daher bereits vorgeschlagen, die Feststellbremsen elektrisch zu betätigen, wodurch die beschriebenen Nachteile weitgehend vermieden werden können. Solche elektrisch betätigten Feststellbremsen weisen zusätzlich eine mechanische Verriegelung auf, damit auch bei Ausfall der Energieversorgung, die üblicherweise über die Fahrzeugbatterie erfolgt, die Feststellung der Bremsen und damit die Ruhestellung des Fahrzeugs garantiert wird. Aufgrund gesetzlicher Vorschriften ist es ferner erforderlich, zusätzlich zu der elektrischen Energieversorgung über die Fahrzeugbatterie eine zweite, redundante Betätigungseinrichtung vorzusehen, damit auch bei Ausfall der Fahrzeugbatterie jedenfalls das einmalige sichere Abstellen des Fahrzeugs möglich bleibt. Hierfür einen Backup-Akkumulator vorzusehen, ist wenig sinnvoll, da dieser ebenso wie die Fahrzeugbatterie überwacht und gewartet werden müßte. Es ist zu berücksichtigen, daß auch nach 10 Jahren Lebensdauer die Funktion zuverlässig garantiert werden muß.

Im allgemeinen werden daher mechanische Fail-Safe-Konzepte zugrundegelegt, die vom Fahrersitz aus betätigbar sind. So ist aus der DE 42 18 717 A1 eine Betätigungseinrichtung für eine Feststellbremse eines Kraftfahrzeugs bekannt, bei der im Normalbetrieb ein Elektromotor über einen Spindelantrieb die Feststellbremse anzieht bzw. löst. Der Motor wird hierbei von einem Positionsregelkreis durch Sollwert-Istwert-Vergleich über einen Handbremshebel gesteuert, dessen Stellung von einem Soll-Positionssensor erfaßt wird. Die elektrischen Komponenten werden über die Fahrzeugbatterie mit Energie versorgt. Im Notbetrieb, also bei Ausfall elektronischen Komponenten des Positionsregelkreises, einer Steuerung, des Motors oder gar der Fahrzeugbatterie, läßt sich die Feststellbremse über eine an dem Handbremshebel vorgesehene Handkurbel von Hand betätigen. Die Handkurbel ist über eine biegsame Welle mit dem Spindelantrieb der Feststellbremse verbunden, so daß durch Drehen der Handkurbel die Feststellbremse manuell verstellbar ist. Hierdurch wird jedoch ein Teil der durch die grundsätzlich elektrische Betätigung der Feststellbremse erzielten Vorteile geschmälert, da für die Bauteile des Notfallsystems und deren Montage zusätzliche Kosten aufgewandt werden müssen.

Aufgabe der Erfindung ist es daher, die Notfallbetätigung einer elektrisch betätigten Feststellbremse auf einfachere Weise zu ermöglichen.

Mit der Erfindung wird diese Aufgabe im wesentlichen dadurch gelöst, daß eine von der primären elektrischen Energieversorgung unabhängige sekundäre elektrische Energieversorgung vorgesehen ist, und daß die sekundäre Energieversorgung eine Einrichtung zur Umwandlung von mechanischer körperlicher Arbeit in elektrische Energie und eine Einrichtung zur Speicherung der so erzeugten elektrischen Energie aufweist.

Auch die gesetzlich erforderliche redundante Betätigungseinrichtung für die Feststellbremse wird somit elektrisch betrieben, ohne daß eine dauerhafte Speicherung dieser Energie und die damit erforderliche Wartung der Speichereinrichtung bis zum Eintreten des Notfalls notwendig wäre. Vielmehr wird die elektrische Energie erst dann erzeugt, wenn der Notfall tatsächlich eintritt. Da für die einmalige Feststellbremsenbetätigung keine sehr hohe Energie notwendig ist, ist auch die zu ihrer Erzeugung notwendige mechanische Arbeit begrenzt. Da diese zudem in der Speichereinrichtung gespeichert wird, bis die notwendige Energiemenge vorhanden ist, kann die mechanische Arbeit ohne nennenswerte körperliche Anstrengung problemlos von Hand erbracht werden. Ein derartiges System ist insbesondere im Hinblick auf die Lebensdauer als sicher anzusehen und bedarf keiner besonderen Wartung. Auch der Installationsaufwand ist gering, da lediglich eine Ankopplung an die elektrische Versorgungsleitung der Feststellbremse und keine gesonderte Verbindung bis zu dem Bremsen selbst oder deren Spindelantrieb hergestellt werden muß.

Gemäß einer bevorzugten Ausgestaltung der Erfindung ist die Wandlereinrichtung ein Dynamo, der bspw. über eine Handkurbel, ein vorgespanntes Federwerk oder dgl. betätigbar ist. Eine derartige, in vielfältigen Einsätzen, bspw. an Fahrrädern oder bei Dynamotaschenlampen, erprobte Komponente gewährleistet bei äußerst kostengünstiger Herstellung eine zuverlässige Umwandlung der mechanischen Arbeit in die für die Betätigung der Feststellbremse notwendige elektrische Energie. Die Handkurbel ermöglicht eine einfache Betätigung.

Hierbei ist die Handkurbel, das Federwerk oder dgl. vorzugsweise vom Fahrersitz des Kraftfahrzeugs aus bedienbar. Abgesehen davon, daß dies für den Fahrer selbstverständlich am bequemsten ist, läßt sich auf diese weise auch eine einfache Anbindung an die Verbindungsleitung zwischen der primären Energieversorgung und der Feststellbremse erreichen, ohne daß zusätzliche Leitungen notwendig wären.

Zweckmäßigerweise ist die Handkurbel, die Wandlereinrichtung und/oder die Energiespeichereinrichtung in den Handbremshebel oder dgl. zur normalen Betätigung der Feststellbremse integriert, so daß der leichte Zugang gewährleistet ist, ohne die Optik des Fahrzeuginneren zu beeinträchtigen.

In Weiterbildung der Erfindung ist die Energiespeichereinrichtung ein Kondensator. Da die Betätigungsenergie für die Feststellbremse aufgrund der nur punktuell auftretenden Leistungsspitzen sehr niedrig sein kann, genügt ein kleiner Zwischenpuffer. Auch sind Kondensatoren kostengünstig und weisen eine ausreichend lange Lebensdauer auf.

Bei einer Ausgestaltung der Erfindung ist die Stromabgabe der Energiespeichereinrichtun an den Elektromotor über ein Bedienelement der Feststellbremse dosierbar, so daß die Bremskraft vorzugsweise stufenlos eingestellt werden kann.

Bei einer weiteren Ausgestaltung der Erfindung ist die sekundäre Energieversorgung ebenso wie die primäre Energieversorgung über eine elektronische Schnittstelle mit übergeordneten Systemen, bspw. einer Wegfahrsperre, einer Anfahrhilfe oder dgl. gekoppelt.

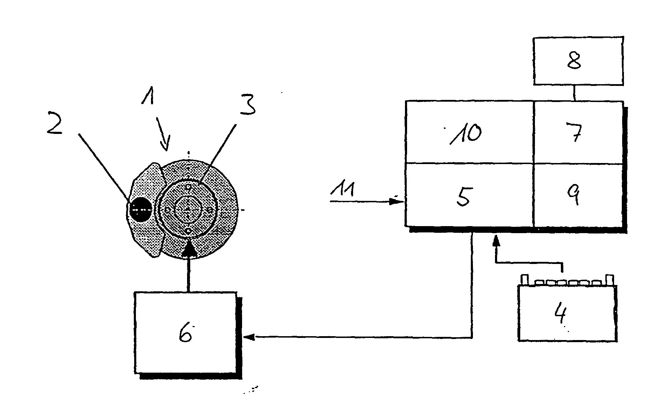

Weiterbildungen, Vorteile und Anwendungsmöglichkeiten der Erfindung ergeben sich auch aus der nachfolgenden Beschreibung eines Ausführungsbeispiels und der Zeichnung. Dabei bilden alle beschriebenen und/oder bildlich dargestellten Merkmale für sich oder in beliebiger Kombination den Gegenstand der Erfindung, unabhängig von ihrer Zusammenfassung in den Ansprüchen oder deren Rückbeziehung.

Die einzige Figur zeigt in Form eines Blockschaltbildes die Komponenten der erfindungsgemäßen Feststellbremseinrichtung.

In der Zeichnung ist lediglich schematisch eine Radbremse 1 eines im übrigen nicht näher gezeigten Fahrzeuges dargestellt. Die Bremse 1 ist Teil einer üblichen hydraulischen Zweikreis-Bremsanlage mit einer an jedem Fahrzeugrad vorgesehenen hydraulischen Betriebsbremse 2 sowie einer wenigstens auf die Radbremsen der Hinterräder des Fahrzeugs wirkenden Feststellbremse 3, insbesondere einer Duo-Servo-Feststellbremse.

Die Feststellbremse 3 wird im Normalbetrieb über einen von der Fahrzeugbatterie 4 gespeisten Elektromotor 5 betätigt, dessen hier nicht näher dargestellte Motorwelle bspw. über einen Spindelantrieb 6 auf die Feststellbremse 3 wirkt. Der Spindelantrieb 6 ist selbsthemmend, so daß die Feststellbremse 3 mechanisch stromlos verriegelt ist und das Fahrzeug unabhängig von der weiteren Funktionsfähigkeit der Fahrzeugbatterie 4 sicher abgestellt werden kann.

Im Notfall, d.h. bei Ausfall der Fahrzeugbatterie 4 als primärer Energieversorgung des Elektromotors 5 läßt sich der Spindelantrieb 6 zur Betätigung der Feststellbremse 3 über eine sekundäre, redundante Energieversorgung antreiben. Diese zweite Energieversorgung weist eine Wandlereinrichtung, bspw. in Form eines Dynamos 7 auf, der über eine Handkurbel 8 oder dgl. antreibbar ist und die mechanische Arbeit in elektrische Energie umwandelt. Zur Speicherung der so erzeugten elektrischen Energie ist eine Speichereinrichtung 9 vorgesehen. Da zur Betätigung der Feststellbremse 3 aufgrund der nur punktuell auftretenden Leistungsspitzen relativ wenig Energie notwendig ist, genügt ein kleiner Zwischenpuffer. Zweckmäßigerweise wird hierzu eine Kondensator verwendet, der die elektrische Energie speichert und nach Betätigung eines Bedienelementes 10 die elektrische Energie an den Elektromotor 5 zur Betätigung der Feststellbremse 3 abgibt. Als Bedienelement 10 auch der sekundären Energieversorgung kann der ohnehin vorhandene, hier nicht dargestellte Handbremshebel verwendet werden. Zweckmäßigerweise ist eine Sicherung gegen unbeabsichtigtes Betätigen vorgesehen.

Die Handkurbel 8 zur Betätigung des Dynamos 7 der Wandlereinrichtung ist im Bereich des Fahrersitzes des Kraftfahrzeugs angeordnet, damit sie zum Abstellen des Fahrzeugs bequem betätigbar ist. Vorzugsweise ist die Handkurbel 8 und ggf. auch der Dynamo 7 und die Speichereinrichtung 9 in den Handbremshebel integriert, so daß kein zusätzlicher Platz beansprucht und die Optik des Fahrzeuginnenraumes nicht beeinträchtigt wird. Außerdem läßt sich auf diese Weise eine einfache Verbindung zur Versorgungsleitung des Elektromotors 5 schaffen, da die Feststellbremse ja auch im Normalbetrieb elektrisch betätigt ist und die entsprechenden Leitungen ohnehin vorhanden sind.

Die Speichereinrichtung 9 oder der Elektromotor 5 können eine Schnittstelle 11 zur Verbindung mit übergeordneten Systemen, wie einer Wegfahrsperre oder einer Anfahrhilfe (Hill-holder) aufweisen, so daß die Feststellbremseinrichtung auch im Notbetrieb unter Nutzung dieser Komponenten betätigbar ist.

Mit der Erfindung wird somit gemäß dem gesetzlichen Erfordernis eine redundante Feststellbremsenbetätigungseinrichtung zusätzlich zur primären Energieversorgung durch die Fahrzeugbatterie 4 ermöglicht, ohne daß für die Verlegung mechanischer Betätigungseinrichtungen zusätzliche Kosten erforderlich würden. Da die elektrische Energie der sekundären Energieversorgung nicht über längere Zeit gespeichert werden muß sondern lediglich im Bedarfsfall aktiviert wird, ist keine gesonderte Wartung der Speichereinrichtung notwendig.

### Bezugszeichenliste:

- 1: Radbremse
- 2: Betriebsbremse
- 3: Feststellbremse
- 4: Fahrzeugbatterie
- 5: Elektromotor
- 6: Spindelantrieb
- 7: Dynamo
- 8: Handkurbel
- 9: Speichereinrichtung
- 10: Bedienelement
- 11: Schnittstelle

## Patentansprüche

1. Feststellbremseinrichtung für Kraftfahrzeuge mit einem von einer primären elektrischen Energieversorgung, bspw. der Fahrzeugbatterie (4), gespeisten Elektromotor (5) zur Betätigung der Feststellbremse (3) und mit einer mechanisch stromlosen Verriegelungseinrichtung (6) zum Verhindern eines ungewollten Lösens der Feststellbremse (3), **dadurch gekennzeichnet, daß** eine von der primären elektrischen Energieversorgung (4) unabhängige sekundäre elektrische Energieversorgung vorgesehen ist, und daß die sekundäre Energieversorgung eine Einrichtung (7) zur Umwandlung von mechanischer körperlicher Arbeit in elektrische Energie und eine Einrichtung (9) zur Speicherung der so erzeugten elektrischen Energie aufweist.

2. Feststellbremseinrichtung nach Anspruch 1, **dadurch gekennzeichnet, daß** die Wandlereinrichtung ein Dynamo (7) ist, der über eine Handkurbel (8) oder dgl. betätigbar ist.

3. Feststellbremseinrichtung nach Anspruch 2, **dadurch gekennzeichnet, daß** die Handkurbel (8) oder dgl. vom Fahrersitz des Kraftfahrzeuges aus bedienbar ist.

4. Feststellbremseinrichtung nach Anspruch 2 oder 3, **dadurch gekennzeichnet, daß** die Handkurbel (8) oder dgl., der Dynamo (7) und/oder die Energiespeichereinrichtung (9) in den Handbremshebel integriert ist.

5. Feststellbremseinrichtung nach einem der Ansprüche 1 bis 4, **dadurch gekennzeichnet, daß** die Wandlereinrichtung über ein Federwerk betätigbar ist.

6. Feststellbremseinrichtung nach einem der Ansprüche 1 bis 5, **dadurch gekennzeichnet, daß** die Energiespeichereinrichtung (9) ein Kondensator ist.

7. Feststellbremseinrichtung nach einem der Ansprüche 1 bis 6, **dadurch gekennzeichnet, daß** die Stromabgabe der Energiespeichereinrichtung (8) an dem Elektromotor (5) über ein Bedienelement (10) der Feststellbremse (3) dosierbar ist.

8. Feststellbremseinrichtung nach einem der Ansprüche 1 bis 7, **gekennzeichnet durch** eine Schnittstelle (11) zu übergeordneten Systemen, bspw. einer Wegfahrsperre, einer Anfahrhilfe oder dgl.

## Claims

1. Parking brake device for motor vehicles with an electric motor (5) that is fed by a primary electric energy supply such as the vehicle battery (4) and intended for operation of the parking brake (3), and with a mechanically currentless locking device (6) to prevent inadvertent release of the parking brake (3),
**characterized in that** a secondary electric energy supply is provided that is independent of the primary electric energy supply (4), and **in that** the secondary energy supply includes a device (7) for converting mechanical physical work into electric energy and a device (9) for storing the so produced electric energy.

2. Parking brake device as claimed in claim 1,
**characterized in that** the converting device is a dynamo (7) which is operable by means of a crank handle (8) or a like element.

3. Parking brake device as claimed in claim 2,
**characterized in that** the crank handle (8) or a like element is operable from the driver's seat of the motor vehicle.

4. Parking brake device as claimed in claim 2 or 3,
**characterized in that** the crank handle (8) or a like element, the dynamo (7), and/or the energy storing device (9) is/are integrated into the hand brake lever.

5. Parking brake device as claimed in any one of claims 1 to 4,
**characterized in that** the converting device is operable by way of a spring mechanism.

6. Parking brake device as claimed in any one of claims 1 to 5,
**characterized in that** the energy storing device (9) is a capacitor.

7. Parking brake device as claimed in any one of claims 1 to 6,
**characterized in that** the current delivery from the energy storing device (8) to the electric motor (5) can be metered by way of an operating element (10) of the parking brake (3).

8. Parking brake device as claimed in any one of claims 1 to 7,
**characterized by** an interface (11) to superior systems, for example, an immobilizer, a starting aid, or a system of this type.

## Revendications

1. Mécanisme à frein de stationnement d'automobile, comportant un moteur électrique (5) pour commander le frein de stationnement (3), alimenté par une source d'énergie électrique primaire, par exemple, la batterie d'automobile, et comportant un système de verrouillage (6) mécaniquement sans courant pour empêcher un desserrage involontaire du frein de stationnement (3), **caractérisé en ce qu'**une source d'énergie électrique secondaire indépendante de la source d'énergie électrique primaire (4) est prévue, et que l'alimentation en énergie secondaire comporte une installation (7) à transformer du travail mécanique physique en énergie électrique, et une installation (9) à accumuler l'énergie électrique ainsi générée.

2. Mécanisme à frein de stationnement selon la revendication 1, **caractérisé en ce que** l'appareil de transformation est une dynamo (7) opérable par l'intermédiaire d'une manivelle (8) etc.

3. Mécanisme à frein de stationnement selon la revendication 2, **caractérisé en ce que** l'appareil de transformation (8) etc. est opérable du siège du conducteur de l'automobile.

4. Mécanisme à frein de stationnement selon les revendications 2 ou 3, **caractérisé en ce que** l'appareil de transformation (8) etc., la dynamo (7) et/ou l'installation pour accumuler l'énergie sont intégrés dans le levier de frein à main.

5. Mécanisme à frein de stationnement selon l'une des revendications 1 à 4, **caractérisé en ce que** l'appareil de transformation est opérable par l'intermédiaire d'un système à ressort.

6. Mécanisme à frein de stationnement selon l'une des revendications 1 à 5, **caractérisé en ce que** l'installation à accumuler l'énergie (9) est un condenseur.

7. Mécanisme à frein de stationnement selon l'une des revendications 1 à 6, **caractérisé en ce que** la fourniture de courant de l'installation à accumuler de l'énergie (8) au moteur électrique (5) est dosable par l'intermédiaire d'un élément de commande (10) du frein de stationnement (3).

8. Mécanisme à frein de stationnement selon l'une des revendications 1 à 7, **caractérisé par** une interface (11) aux systèmes supérieurs, par exemple, un dispositif anti-démarrage ou démarrage assisté etc.
